# EUROPEAN PATENT SPECIFICATION

(11) **EP 3 358 938 B1**
(45) Date of publication and mention of the grant of the patent: **16.06.2021**
(21) Application number: 16782383.0
(22) Date of filing: 07.10.2016
(51) Int. Cl.: A01G 13/02

(54) **REINFORCED PROTECTIVE COVERS AND GUARDS FOR TREES, SHRUBS, AND VINES**
VERSTÄRKTE SCHUTZABDECKUNGEN UND SCHUTZVORRICHTUNGEN FÜR BÄUME, STRÄUCHER UND REBEN
COUVERCLES DE PROTECTION RENFORCÉS ET DISPOSITIFS DE SÉCURITÉ POUR ARBRES, ARBUSTES ET VIGNES

(30) Priority: 07.10.2015 US 201562238198 P
(43) Date of publication of application: 15.08.2018
(73) Proprietor: Avintiv Specialty Materials Inc., Charlotte, North Carolina 28269 (US)
(72) Inventor: LATTEN, Kenneth Dean, Aberdare Aberaman CF44 65A (GB); OLIVER, Timothy, Stroud Brimscombe GL5 28A (GB); MCCARTHY, Andrew Mark, Newport South Wales NP20 2HS (GB); WORMALD, Paul Stuart, Maldon Essex CM9 6AZ (GB)
(74) Representative: Grünecker Patent- und Rechtsanwälte PartG mbB
(86) International application number: PCT/US2016/055961
(87) International publication number: WO 2017/062749

(56) References cited:
- WO-A1-87/01904
- WO-A1-95/24117
- WO-A1-2013/067583
- AU-B2- 716 241

## Description

### TECHNICAL FIELD

The presently-disclosed invention relates generally to a shelter to protect and/or enhance the growth of plants. In particular, the invention relates to a reinforced shelter configured to receive at least one retaining structure directly into and through the wall of the shelter.

### BACKGROUND

Tree and plant shelters are known in the art and typically comprise a basic plastic structure configured to surround the tree or the plant to allow the tree or plant to grow without being disturbed by harsh environmental elements or become disturbed by animals. The plastic used may be translucent to allow some light to reach the growing tree or plant through the walls of the basic plastic structure. Other configurations of the structure merely allow light to pass through one or more openings in the structure.

The opaque nature of conventional plastic structures typically does not allow a sufficient amount of light to reach the tree or the plant through the walls of the structure. While one or more additional openings may be configured into the structure, these openings may allow either the growth or survival of the tree or plant to be comprised resulting from contact with environmental elements or animals. Smaller apertures may be provided, however, the tree or plant may still suffer wind damage. Additionally, the apertures or other openings provided in the structure may compromise the overall strength of the structure as well. Apertures and/or openings also provide growth avenues for the tree or plant, and when it is time for the shelter to be removed, damage may occur to those portions of the tree or plant that extend though such apertures or openings.

There remains a need in the art for a robust and resilient tree or plant shelter that protects young plants or saplings from the elements of nature while still providing sufficient light to facilitate growth in the tree or plant WO 95/24117 discloses a shelter according to the preamble of claim 1.

Conventionally formed structures also require stakes to be fixed to the outside of the structure, providing only limited stability. As such, stakes and structures may be blown over by a strong wind or break due to tampering by animals. There remains a need in the art for a tree or plant shelter that may be configured to receive one or more retaining structures to reinforce the shelter.

### SUMMARY OF INVENTION

One or more embodiments of the invention may address one or more of the aforementioned problems. Certain embodiments, provide a shelter for protecting and/or enhancing the growth of plants, in particular, young trees, shrubs, and/or vines. The invention is directed to a shelter, which is reinforced by receiving a retaining structure or retaining structure(s) such as, for example, a stake. A dowel, and/or a peg directly into and through the wall of the shelter to anchor or provide further securement of the shelter to the ground underneath or proximate to the area of the shelter.

The invention provides a shelter comprising an outer longitudinal tubular structure having an outer wall, a first-outer-longitudinal-tubular-structure end, and a second-outer-longitudinal-tubular-structure end diametrically opposed to the first-outer-longitudinal-tubular-structure end; an inner longitudinal tubular structure positioned within the outer longitudinal tubular structure and having an inner wall, a first-inner-longitudinal-tubular-structure end, and a second-inner-longitudinal-tubular-structure end diametrically opposed to the first-inner-longitudinal-tubular-structure end; and a segmented annular portion positioned between the outer wall and the inner wall. The outer longitudinal tubular structure and the inner longitudinal tubular structure may be positioned relative to each other to define an annulus located between the outer and inner longitudinal tubular structures in accordance with certain embodiments of the invention. In this regard, the inner longitudinal tubular structure may be located inside the outer longitudinal tubular structure. In certain embodiments of the invention, for example, the outer and inner longitudinal tubular structures may have or share the same center of axis such that the outer and inner longitudinal tubular structures may be concentric. In this regard, certain embodiments of the invention may comprise concentric outer and inner longitudinal tubular structures. The segmented annular portion may comprise a plurality of segmented annular divider walls defining a plurality of through channels extending from the first-outer-longitudinal-tubular-structure end to the second-outer-longitudinal-tubular-structure end. In accordance with certain embodiments of the invention, for example, one or more through channels may be defined by an inner surface of the outer longitudinal tubular structure, an outer surface of the inner longitudinal tubular structure, and one or more segmented annular divider walls.

The plurality of through channels is configured to receive at least one retaining structure. According to the invention, the shelter may further comprise at least one retaining structure. In certain embodiments of the invention, the at least one retaining structure may be a stake, a dowel, a peg, or a combination thereof. In some embodiments of the invention, the second-outer-longitudinal-tubular-structure end and/or the second-inner-longitudinal-tubular-structure end may be configured to be inserted below ground level. In certain embodiments of the invention, the inner longitudinal tubular structure may be configured to receive a plant (or a portion of a plant) therein.

In accordance with the invention, the first-outer-longitudinal-tubular-structure end may comprise a first-outer-longitudinal-tubular-structure end diameter and the second-outer-longitudinal-tubular-structure end may comprise a second-outer-longitudinal-tubular-structure end diameter. In certain embodiments of the invention, the first-outer-longitudinal-tubular-structure end diameter and the second-outer-longitudinal-tubular-structure end diameter may be the same or different. In other embodiments of the invention, the first-outer-longitudinal-tubular-structure end diameter may be larger or smaller than the second-outer-longitudinal-tubular-structure end diameter. In some embodiments of the invention, the first-inner-longitudinal-tubular-structure end may comprise a first-inner-longitudinal-tubular-structure end diameter and the second-inner-longitudinal-tubular-structure end may comprise a second-inner-longitudinal-tubular-structure end diameter. In certain embodiments of the invention, the first-inner-longitudinal-tubular-structure end diameter and the second-inner-longitudinal-tubular-structure end diameter may be the same or different. In further embodiments of the invention, the first-inner-longitudinal-tubular-structure end diameter may be larger or smaller than the second-inner-longitudinal-tubular-structure end diameter.

In accordance with certain embodiments of the invention, at least the outer longitudinal tubular structure (or a portion thereof) may be translucent, while in some embodiments of the invention both the outer longitudinal tubular structure and the inner longitudinal tubular structure (or portions thereof) may be translucent. In other embodiments of the invention, at least the outer longitudinal tubular structure (or a portion thereof) may be transparent, while in some embodiments of the invention both the outer longitudinal tubular structure and the inner longitudinal tubular structure (or portions thereof) may be transparent. According to certain embodiments of the invention, at least one of the outer longitudinal tubular structure, the inner longitudinal tubular structure, the plurality of segmented annular divider walls, or any combination thereof may comprise at least one of a polymer, a biodegradable polymer, a biocomposite, or any combination thereof. In some embodiments of the invention, the polymer may comprise at least one of an extruded thermoplastic polymer, an extruded thermoset polymer, a mold-formed thermoplastic polymer, a mold-formed thermoset polymer, or any combination thereof. In further embodiments of the invention, the polymer may comprise at least one of a polyethylene, a polypropylene, a partially aromatic polyester, a fully aromatic polyester, a polyhexamethylene diadipamide, a polycaprolactam, an aromatic polyamide, a partially aromatic polyamide, an aliphatic polyamide, or any combination thereof. In some embodiments of the invention, the biodegradable polymer may comprise at least one of a cellulose, a polylactic acid, a cellophane, a native starch, a thermoplastic starch, a polyhydroxy butyrate, a poly-hydroxybutyrate-co-b-hydroxy valerate, a polyglycolic acid, a polycaprolactone, a compostable bioplastic, a platinum-catalyzed silicone, a reclaimed potato starch resin, or any combination thereof.

According to certain embodiments of the invention, the shelter may further comprise at least one of an ultraviolet stabilizer, a waterproofing additive, an extending filler, a prodegradant agent, a reinforcing filler, an animal repellent, a fungal repellent, a bacterial repellent, or any combination thereof. In some embodiments of the invention, the waterproofing additive may comprise at least one of a polyhydrogenomethylsiloxane, a silane, or any combination thereof. In certain embodiments of the invention, the extending filler may comprise at least one of a wood flour filler, an olive stones powder filler, a wheat straw flour filler, a rice hull ash filler, or any combination thereof. In further embodiments of the invention, the reinforcing filler may comprise at least one of a waste paper sludge filler, a wood fiber filler, a jute filler, a flax filler, a hemp filler, a straw filler, a calcium carbonate filler, or any combination thereof. In an example embodiment of the invention, the outer longitudinal tubular structure may comprise a plurality of wood medium density fibers in a polylactide matrix covered with a polylactide film.

In accordance with certain embodiments of the invention, at least the outer longitudinal tubular structure (or a portion thereof) may comprise a mesh, while in some embodiments of the invention, both the outer and inner longitudinal tubular structure (or portions thereof) may comprise a mesh. In such embodiments of the invention, the mesh may comprise a polymer-coated biocomposite mesh. In certain embodiments of the invention, a mesh structure for the outer and/or inner longitudinal tubular structure may independently comprise a plurality of spaced elongate supports connected via at least one strengthening member. In some embodiments of the invention, the plurality of spaced elongate supports may be hollow. In other embodiments of the invention, the plurality of spaced elongate supports may be solid. According to certain embodiments of the invention, the plurality of spaced elongate supports may be parallel to each other in a longitudinal direction. In some embodiments of the invention, the plurality of spaced elongate supports may extend longitudinally along or to define at least one of the outer longitudinal tubular structure, the inner longitudinal tubular structure, or any combination thereof. In further embodiments of the invention, the at least one strengthening member may be positioned substantially perpendicular to the plurality of spaced elongate supports. In certain embodiments of the invention, one strengthening member may contact at least two of the plurality of spaced elongate supports. In further embodiments of the invention, the shelter may further comprise a plurality of apertures extending from the first-outer-longitudinal-tubular-structure end at least partially along the outer longitudinal tubular structure.

In accordance with certain embodiments of the invention, the shelter may comprise a substantially circular cross-section. In other embodiments of the invention, the shelter may comprise a substantially square cross-section. In further embodiments of the invention, the shelter may comprise a substantially rectangular cross-section. In some embodiments of the invention, the shelter may comprise a substantially triangular cross-section.

In accordance with certain embodiments of the invention, the shelter may further comprise a protecting member positioned at the outer longitudinal tubular structure second end that extends at least partially along the outer longitudinal tubular structure. In such embodiments of the invention, the protecting member may comprise a petroleum-based plastic resin. In some embodiments of the invention, the protecting member may comprise at least one of a degradation-resistant coating, a slip-on sleeve, or any combination thereof. In further embodiments of the invention, at least one of the outer longitudinal tubular structure, the inner longitudinal tubular structure, the plurality of segmented annular divider walls, or any combination thereof may comprise a degradation-resistant coating. According to certain embodiments of the invention, the degradation-resistant coating may comprise at least one of a polypropylene, a high density polyethylene, a low density polyethylene, a polyvinyl chloride, a polyester, a polyurethane, a compostable bioplastic, an atactic polypropylene-modified bitumen, a polylactide, or any combination thereof. In some embodiments of the invention, the degradation-resistant coating may comprise a polypropylene film.

### BRIEF DESCRIPTION OF THE DRAWING(S)

The invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout, and wherein:
FIG. 1A is an isometric view of a shelter according to an embodiment of the invention;
FIG. 1B is a top view of the shelter of FIG. 1A according to an embodiment of the invention;
FIG. 2A is an isometric view of a securing structure inserted into the shelter according to an embodiment of the invention;
FIG. 2B is a top view of the shelter of FIG. 2A according to an embodiment of the invention;
FIG. 3 is an isometric view of a shelter according to another embodiment of the invention;
FIG. 4 is an isometric view of a shelter according to another embodiment of the invention;
FIG. 5 is a process flow diagram for a method of manufacturing a shelter not according to the invention; and
FIG. 6 is a process flow diagram for a method of protecting a plant including an optional step of inserting the second-outer-longitudinal-tubular-structure end below ground level not according to the invention.

### DETAILED DESCRIPTION

The invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

It is to be understood, however, that the drawings are designed solely for purposes of illustration and not as a definition of the limits of the invention, for which reference should be made to the appended claims. Any relative dimensions illustrated in the figures are given by way of example and are not intended to be limiting. As would be appreciated by a person having ordinary skill in the art, the relative dimensions can vary depending on any number of factors including, without limitation, the intended use and performance of the illustrated article.

The invention includes, according to certain embodiments, a shelter for protecting and/or enhancing the growth of plants, in particular, young trees, shrubs, and/or vines. Certain embodiments of the invention are directed to a shelter which may be reinforced by receiving a retaining structure, such as a stake, a dowel, and/or a peg, directly into and through the wall of the shelter. The shelter, according to certain embodiments of the invention, includes an outer longitudinal tubular structure having a first-outer-longitudinal-tubular-structure end and a second-outer-longitudinal-tubular-structure end diametrically opposed to the first-outer-longitudinal-tubular-structure end; an inner longitudinal tubular structure positioned within the outer longitudinal tubular structure and having an inner wall, a first-inner-longitudinal-tubular-structure end, and a second-inner-longitudinal-tubular-structure end diametrically opposed to the first-inner-longitudinal-tubular-structure end; and a segmented annular portion positioned between the outer wall and the inner wall. The outer longitudinal tubular structure and the inner longitudinal tubular structure may be positioned relative to each other to define an annulus located between the outer and inner longitudinal tubular structures in accordance with certain embodiments of the invention. In this regard, the inner longitudinal tubular structure may be located inside the outer longitudinal tubular structure. In certain embodiments of the invention, for example, the outer and inner longitudinal tubular structures may have or share the same center of axis such that the outer and inner longitudinal tubular structures may be concentric. In this regard, certain embodiments of the invention may comprise concentric outer and inner longitudinal tubular structures. The segmented annular portion may comprise a plurality of segmented annular divider walls defining a plurality of through channels extending from the first-outer-longitudinal-tubular-structure end to the second-outer-longitudinal-tubular-structure end. The plurality of through channels may be configured to receive at least one retaining structure. In certain embodiments of the invention, the at least one retaining structure may be a stake, a dowel, a peg, and any combination thereof. In accordance with certain embodiments of the invention, for example, one or more through channels may be defined by an inner surface of the outer longitudinal tubular structure, an outer surface of the inner longitudinal tubular structure, and one or more segmented annular divider walls.

### I. Definitions

The terms "substantial" or "substantially" may encompass the whole amount as specified, according to certain embodiments of the invention, or largely but not the whole amount specified according to other embodiments of the invention.

The terms "polymer" or "polymeric", as used interchangeably herein, may comprise homopolymers, copolymers, such as, for example, block, graft, random, and alternating copolymers, terpolymers, etc., and blends and modifications thereof. Furthermore, unless otherwise specifically limited, the term "polymer" or "polymeric" shall include all possible structural isomers; stereoisomers including, without limitation, geometric isomers, optical isomers or enantionmers; and/or any chiral molecular configuration of such polymer or polymeric material. These configurations include, but are not limited to, isotactic, syndiotactic, and atactic configurations of such polymer or polymeric material.

The term "layer", as used herein, may comprise a generally recognizable combination of similar material types and/or functions existing in the X-Y plane.

The terms "nonwoven" and "nonwoven web", as used herein, may comprise a web having a structure of individual fibers, filaments, and/or threads that are interlaid but not in an identifiable repeating manner as in a knitted or woven fabric. Nonwoven fabrics or webs, according to certain embodiments of the invention, may be formed by any process conventionally known in the art such as, for example, meltblowing processes, spunbonding processes, hydroentangling, air-laid, and bonded carded web processes.

The term "spunbond", as used herein, may comprise fibers which are formed by extruding molten thermoplastic material as filaments from a plurality of fine, usually circular, capillaries of a spinneret with the diameter of the extruded filaments then being rapidly reduced. According to an embodiment of the invention, spunbond fibers are generally not tacky when they are deposited onto a collecting surface and may be generally continuous. It is noted that the spunbond used in certain composites of the invention may include nonwoven described in the literature as SPINLACE®.

The term "meltblown", as used herein, may comprise fibers formed by extruding a molten thermoplastic material through a plurality of fine die capillaries as molten threads or filaments into converging high velocity, usually hot, gas (e.g. air) streams which attenuate the filaments of molten thermoplastic material to reduce their diameter, which may be to microfiber diameter, according to certain embodiments of the invention. According to an embodiment of the invention, the die capillaries may be circular. Thereafter, the meltblown fibers are carried by the high velocity gas stream and are deposited on a collecting surface to form a web of randomly disbursed meltblown fibers. Meltblown fibers are microfibers which may be continuous or discontinuous and are generally tacky when deposited onto a collecting surface.

The term "filler", as used herein, may comprise particles or aggregates of particles and other forms of materials that can be added to a polymeric film blend. According to certain embodiments of the invention, a filler will not substantially chemically interfere with or adversely affect the extruded material. According to certain embodiments of the invention, the filler is capable of being uniformly dispersed throughout the material or a layer comprised in a multilayer composite.

The term "biocomposite", as used herein, may comprise two or more distinct substances having natural and biological origin that are combined to produce a new material with properties not present in either individual material. According to certain embodiments of the invention, biocomposite materials may comprise biopolymers and/or biofibers.

The term "biodegradable", as used herein, may comprise all biocomposite and biopolymeric materials including those composed at least in part of sustainable sources and whose cycle is CO₂ neutral, completely slag-free, and are biodegradable at the end of their useful lifetime (e.g., via natural biodecomposition or combustion).

### II. Shelter

A shelter (e.g., for trees, shrubs and vines) may be configured to protect and/or enhance the growth of plants by being reinforced via one or more retaining structure(s) as disclosed herein placed directly into and through the wall of the shelter to anchor or provide further securement of the shelter to the ground underneath or proximate to the area of the shelter. For example, shelters marketed under the name TUBEX® (by Fiberweb Geosynthetics Ltd., a company of Fiberweb, Inc., which is a company of AVINTIV Specialty Materials Inc. of Charlotte, NC) are mostly cylindrical in nature having a hollow inside space but lacking a means of securing a retaining structure in the shelter. According to certain embodiments of the invention, the retaining structure may be a stake, a dowel, a peg, and any combination thereof.

According to the invention, the shelter is designed or configured to provide a plurality of through channels configured to receive at least one retaining structure, such as a stake, a dowel, a peg, and any combination thereof, to provide reinforcement to the shelter and/or anchor the shelter to the ground.

In one aspect, the shelter includes an outer longitudinal tubular structure having an outer wall, a first-outer-longitudinal-tubular-structure end, and a second-outer-longitudinal-tubular-structure end diametrically opposed to the first-outer-longitudinal-tubular-structure end; an inner longitudinal tubular structure positioned within the outer longitudinal tubular structure and having an inner wall, a first-inner-longitudinal-tubular-structure end, and a second-inner-longitudinal-tubular-structure end diametrically opposed to the first-inner-longitudinal-tubular-structure end; and a segmented annular portion positioned between the outer wall and the inner wall. The outer longitudinal tubular structure and the inner longitudinal tubular structure may be positioned relative to each other to define an annulus located between the outer and inner longitudinal tubular structures in accordance with certain embodiments of the invention. In this regard, the inner longitudinal tubular structure may be located inside the outer longitudinal tubular structure. In certain embodiments of the invention, for example, the outer and inner longitudinal tubular structures may have or share the same center of axis such that the outer and inner longitudinal tubular structures may be concentric. In this regard, certain embodiments of the invention may comprise concentric outer and inner longitudinal tubular structures.

In certain embodiments of the invention, for example, the segmented annular portion may comprise a plurality of segmented annular divider walls defining a plurality of through channels extending from the first-outer-longitudinal-structure end to the second-outer-longitudinal-structure end. At least one of the segmented annular divider walls, in accordance with certain embodiments of the invention, may extend either directly or indirectly from an outer surface of the inner longitudinal tubular structure towards and connect either directly or indirectly with an inner surface of the outer longitudinal tubular structure. In this regard, the outer and inner longitudinal tubular structures may, according to certain embodiments of the invention, be joined together via at least one of the segmented divider walls either as a unitary structure (e.g., formed as one single piece and being devoid of any attachment articles such as screws, bolts, clips or the like) or as an assembled structure, in which the individual components (e.g., the outer and inner longitudinal tubular structures and the segmented annular divider walls) may be releasable engaged, such as by screws, bolts, clips and the like, with each other to form an assembled shelter.

In accordance with certain embodiments of the invention, for example, one or more through channels may be defined by an inner surface of the outer longitudinal tubular structure, an outer surface of the inner longitudinal tubular structure, and one or more segmented annular divider walls. According to certain embodiments of the invention, for instance, the plurality of segmented annular divider walls may extend the full length of the shelter from the first-outer-longitudinal-tubular-structure end to the second-outer-longitudinal-tubular-structure end. However, in other embodiments of the invention, for example, the plurality of segmented annular divider walls may only extend along a portion of the shelter beginning at the first-outer-longitudinal-tubular-structure end.

In accordance with certain embodiments of the invention, for instance, the plurality of segmented annular divider walls may comprise a unitary top plate formed as part of the shelter (e.g., the top plate(s) may be formed as an integral portion of the shelter without the need for separate attachment means to the longitudinal tubular structures) and positioned so as to lay flush with the outer and/or inner longitudinal tubular structure first end and/or second end. The unitary top plate may comprise a plurality of apertures extending through the top plate and to the opposite end of the shelter to define through channels for receiving retaining structure(s). In this regard, the plurality of apertures may align with apertures located at the opposite end of the shelter. In other embodiments, however, the unitary top plate may include a plurality of apertures, while the opposite end of the shelter may be open to the ground such that the plurality of apertures may receive retaining structure(s) that may be inserted into the ground without aligning with a second set of apertures.

In accordance with certain embodiments of the invention, the plurality of segmented annular divider walls may comprise one or more cap-portions that extend and/or connect the outer and inner longitudinal tubular structures together, in which the cap-portion or cap-portions may include apertures in a top-facing surface extending through a thickness of the cap-portion(s) to a bottom-facing surface to define through channels for receiving retaining structure(s), which may include a stake, a dowel, a peg, and the like. In this regard, the one or more cap-portions need not extend significantly (if at all) into the longitudinal direction of the annulus defined between the outer and inner longitudinal tubular structures. In certain embodiments of the invention, for example, the cap-portion(s) may be positioned at either or both the first end and second end of the shelter. In certain embodiments of the invention, apertures located in an upper cap-portion (e.g., located at or proximate the first end of the shelter) may be aligned with apertures located in a lower cap-portion (e.g., located at or proximate the second end of the shelter). In accordance, with certain embodiments of the invention, the cap-portions(s) may be releasably engaged with the respective ends of the shelter, such as by engaging the outer and inner longitudinal tubular structures and snapping into place at one or both ends of the shelter.

According to certain embodiments of the invention, for instance, the shelter may comprise from about 1 to about 50 segmented annular divider walls. In other embodiments of the invention, for example, the shelter may comprise from about 3 to about 30 segmented annular divider walls. In further embodiments of the invention, for instance, the shelter may comprise from about 5 to about 10 segmented annular divider walls. As such, in certain embodiments of the invention, the shelter may comprise a number of segmented annular divider walls from at least about any of the following: 1, 2, 3, 4, 5 segmented annular divider walls and/or at most about 50, 40, 30, 25, 20, 15, and 10 segmented annular divider walls (e.g., about 3-15 segmented annular divider walls, about 5-10 segmented annular divider walls, etc.).

In some embodiments of the invention, for instance, the second-outer-longitudinal-tubular-structure end and/or the second-inner-longitudinal-tubular-structure end may be configured to be inserted below ground level. For instance, the second-outer-longitudinal-tubular-structure end and/or the second-inner-longitudinal-tubular-structure end may comprise a blade or blade-like end or a generally narrower thickness to facilitate insertion into the below ground level. In further embodiments of the invention, for example, the second-outer-longitudinal-tubular-structure end and/or the second-inner-longitudinal-tubular-structure end may also extend above the ground or flush with the ground. In this regard, the portion of the outer longitudinal tubular structure that extends just above ground level may be protected from degradation.

In certain embodiments of the invention, for example, the inner longitudinal tubular structure may be configured to receive a plant (or a portion of a plant) therein. In this regard, for instance, both the inner longitudinal tubular structure and the outer longitudinal tubular structure may be configured to fit over and/or encircle the plant or portion of the plant (e.g., trunk of a tree or bush, etc.). As such, the longitudinal tubular structure may be manufactured in a variety of sizes (both length and diameter) to accommodate many different sizes of trees, shrubs or vines.

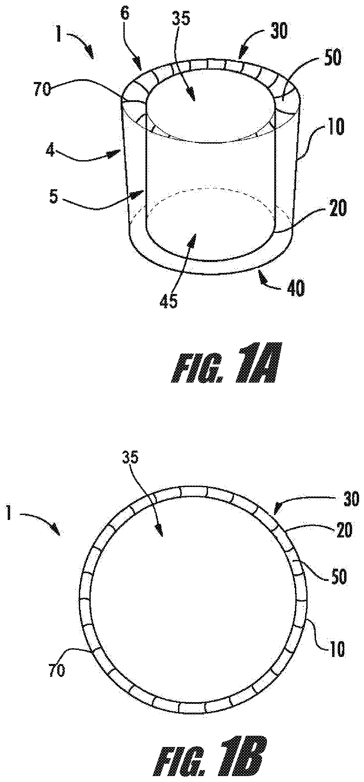

For example, FIG. 1A is an isometric view of a shelter according to an embodiment of the invention, and FIG. 1B is a top view of the shelter of FIG. 1A according to an embodiment of the invention. As shown in FIGs. 1A and 1B, the shelter **1** includes an outer longitudinal tubular structure **4** having an outer wall **10,** a first-outer-longitudinal-tubular-structure end **30,** and a second-outer-longitudinal-tubular-structure end **40** diametrically opposed to the first-outer-longitudinal-tubular-structure end **30;** an inner longitudinal tubular structure **5** positioned within the outer longitudinal tubular structure **4** and having an inner wall **20,** a first-inner-longitudinal-tubular-structure end **35,** and a second-inner-longitudinal-tubular-structure end **45** diametrically opposed to the first-inner-longitudinal-tubular-structure end **35;** and a segmented annular portion **6** positioned between the outer longitudinal tubular structure **4** and the inner longitudinal tubular structure **5**. As shown in FIG. 1A and 1B, the segmented annular portion **6** may comprise a plurality of segmented annular divider walls **70,** at least partially, defining a plurality of through channels **50** extending from the first-outer-longitudinal-tubular-structure end **30** to the second-outer-longitudinal-tubular-structure end **40.** In this regard, the plurality of segmented annular divider walls **70** may divide the annulus defined by the outer longitudinal tubular structure **4** and the inner longitudinal tubular structure **5** into a plurality of through channels **50.**

According to the invention, the plurality of through channels **50** is configured to receive at least one retaining structure. For example, at least one or each of the plurality of through channels **50** is configured (e.g., sized) to receive or accommodate at least one retaining structure. According to certain embodiments of the invention, for example, the shelter may further comprise at least one retaining structure. According to certain embodiments of the invention, the at least one retaining structure may comprise a stake, a dowel, a peg, and the like. Further pursuant to this exemplary embodiment, the at least one retaining structure may be any device known by a person of ordinary skill in the art having the benefit of this disclosure for providing structural support to the shelter when inserted through any one or more of the plurality of through channels **50.**

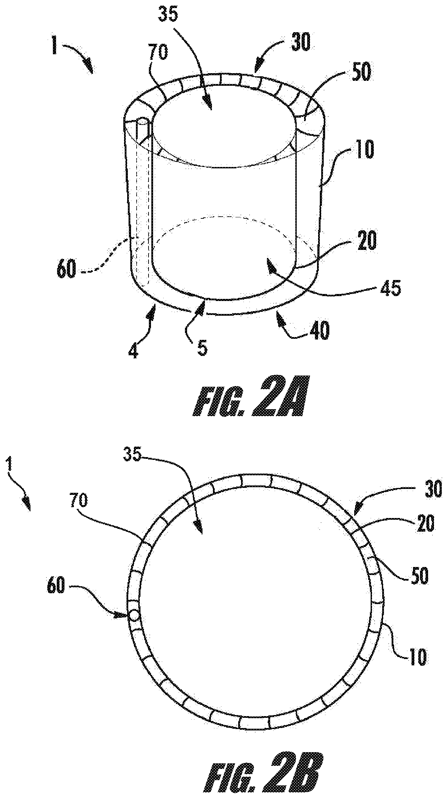

FIG. 2A is an exemplary embodiment of the invention showing an isometric view of a securing structure, similar to a stake, a dowel, a peg, and the like, inserted into the shelter according to an embodiment of the invention. FIG. 2B is a top view of the shelter of FIG. 2A according to an embodiment of the invention. As shown in FIGs. 2A and 2B, the retaining structure **60** may be inserted into any one of the plurality of through channels **50** defined, at least partially, by the plurality of segmented annular divider walls **70.** According to certain embodiments of the invention, not otherwise illustrate in FIGs 2A or 2B, more than one retaining structure may be inserted into only one through channel and/or each in its own through channel.

In accordance with certain embodiments of the invention, for instance, the first-outer-longitudinal-tubular-structure end may comprise a first-outer-longitudinal-tubular-structure end diameter, and the second-outer-longitudinal-tubular-structure end may comprise a second-outer-longitudinal-tubular-structure end diameter. In certain embodiments of the invention, the first-outer-longitudinal-tubular-structure end diameter and the second-outer-longitudinal-tubular-structure end diameter may be the same or different. In other embodiments of the invention, for example, first-outer-longitudinal-tubular-structure end diameter may be larger or smaller than the second-outer-longitudinal-tubular-structure end diameter. In some embodiments of the invention, for instance, the first-inner-longitudinal-tubular-structure end may comprise a first-inner-longitudinal-tubular-structure end diameter, and the second-inner-longitudinal-tubular-structure end may comprise a second-inner-longitudinal-tubular-structure end diameter. In certain embodiments of the invention, the first-inner-longitudinal-tubular-structure end diameter and the second-inner-longitudinal-tubular-structure end diameter may be the same or different. In further embodiments of the invention, for example, the first-inner-longitudinal-tubular-structure end diameter may be larger or smaller than the second-inner-longitudinal-tubular-structure end diameter.

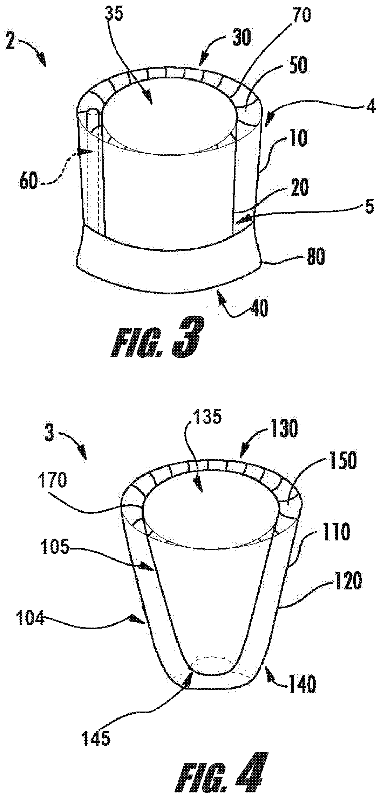

For example, FIG. 1A illustrates a shelter 1 having a first-outer-longitudinal-tubular-structure end **30** and a second-outer-longitudinal-tubular-structure end **40** with the same diameter, and a first-inner-longitudinal-tubular-structure end **35** and a second-inner-longitudinal-tubular-structure end **45** with the same diameter. In contrast, FIG. 4 illustrates a shelter **3** having a first-outer-longitudinal-tubular-structure end **130** with a larger diameter than the second-outer-longitudinal-tubular-structure end **140,** and a first-inner-longitudinal-tubular-structure end **135** with a larger diameter than the second-inner-longitudinal-tubular-structure end **145.**

In accordance with certain embodiments of the invention, for instance, at least the outer longitudinal tubular structure (or a portion thereof) may be translucent, while in some embodiments both the outer longitudinal tubular structure and the inner longitudinal tubular structure (or portions thereof) may be translucent. In other embodiments of the invention, for example, at least the outer longitudinal tubular structure (or a portion thereof) may be transparent, while in some embodiments both the outer longitudinal tubular structure and the inner longitudinal tubular structure (or portions thereof) may be transparent.

According to certain embodiments of the invention, for instance, at least one of the outer longitudinal tubular structure, the inner longitudinal tubular structure, the plurality of segmented annular divider walls, or any combination thereof may comprise at least one of a polymer, a biodegradable polymer, a biocomposite, or any combination thereof. In some embodiments of the invention, for example, the polymer may comprise at least one of an extruded thermoplastic polymer, an extruded thermoset polymer, a mold-formed thermoplastic polymer, a mold-formed thermoset polymer, or any combination thereof. In further embodiments of the invention, for instance, the polymer may comprise at least one of a polyethylene, a polypropylene, a partially aromatic polyester, a fully aromatic polyester, a polyhexamethylene diadipamide, a polycaprolactam, an aromatic polyamide, a partially aromatic polyamide, an aliphatic polyamide, or any combination thereof. In some embodiments, for example, the polymer may comprise polypropylene.

According to an embodiment of the invention, the shelter may comprise an extruded plastic component, for example, any one or more of the outer longitudinal tubular structure, the inner longitudinal tubular structure, and/or the plurality of segmented annular divider walls may comprise an extruded plastic. In accordance with certain embodiments of the invention, the shelter may comprise a unitary structure in which the outer longitudinal tubular structure, the inner longitudinal tubular structure, and the plurality of segmented annular divider walls are formed as a single piece (e.g., devoid of any attachment articles such as screws, bolts, clips or the like).

In other embodiments of the invention, for instance, all or portions of the shelter may comprise a fiber-reinforced composite including a continuous resin matrix reinforced with fibers. The continuous resin matrix may extend through and at least partially encase the fibers. In this regard, the fibers may be completely embedded or encased by a resin material or at least partially embedded or encased by a resin material. In such embodiments, for example, the fibers may comprise a nonwoven or a woven. In a non-limiting example of a shelter that comprises a nonwoven composite, for instance, the nonwoven composite may comprise at least one nonwoven layer impregnated with a continuous resin matrix. In certain embodiments of the invention, for instance, the nonwoven composite may comprise at least one of a meltblown layer or a spunbond layer. In accordance with certain embodiments of the invention, for instance, the resin may comprise at least one of a thermoplastic resin, a thermosetting resin, or any combination thereof. In some embodiments of the invention, for example, the resin may comprise at least one of a natural resin, a synthetic resin, or any combination thereof. In further embodiments of the invention, for instance, the resin may comprise at least one of a polyester resin, a vinylester resin, an epoxy resin, or any combination thereof.

In some embodiments of the invention, for example, the biodegradable polymer may comprise at least one of a cellulose, a polylactic acid, a cellophane, a native starch, a thermoplastic starch, a polyhydroxy butyrate, a poly-hydroxybutyrate-co-b-hydroxy valerate, a polyglycolic acid, a polycaprolactone, a compostable bioplastic (e.g., MATER-BI®), a platinum-catalyzed silicone (e.g., ECOFLEX®, ECOFLEX®/PLA), a reclaimed potato starch resin (e.g., SOLANYL®), a thermoset biopolymer (e.g., TRIBEST® S351),or any combination thereof. In certain embodiments of the invention, only a portion of the shelter includes a biodegradable material, for example, allowing that portion of the shelter to biodegrade over time.

According to certain embodiments of the invention, for instance, the shelter may further comprise at least one of an ultraviolet stabilizer, a waterproofing additive, an extending filler, a prodegradant agent, a reinforcing filler, an animal repellent, a fungal repellent, a bacterial repellent, or any combination thereof. In certain embodiments of the invention, for instance, a prodegradant agent may accelerate the degradation caused by oxygen in the atmosphere. In some embodiments of the invention, for example, the waterproofing additive may comprise at least one of a polyhydrogenomethylsiloxane, a silane (e.g., triethoxymethyl silanes), or any combination thereof. In certain embodiments of the invention, for instance, the extending filler may comprise at least one of a wood flour filler, an olive stones powder filler, a wheat straw flour filler, a rice hull ash filler, any combination thereof, or other extending fillers know in the art.

The material of the shelter may additionally comprise reinforcing fillers, for example, to reinforce the shelter or some portion of the shelter such as any one or more of the longitudinal tubular structures, a support ring (as discussed below), a ground protection ring (as discussed below), and/or any other part of the shelter. Other fillers that may be used to control the amount of light and/or the wavelength of light that may pass through the shelter. In such embodiments of the invention, for example, the reinforcing filler may comprise at least one of a waste paper sludge filler (e.g., a mixture of waste paper fibers and inorganic residues), a wood fiber filler, a jute filler, a flax filler, a hemp filler, a straw filler, a calcium carbonate filler, or any combination thereof. In an embodiment of the invention, a calcium carbonate filler, such as a coated calcium carbonate filler having an average particle size of less than about 3 microns may be used as a filler to, for at least one of, control the amount and/or wavelength of light that may pass through the shelter.

In an example embodiment of the invention, for instance, the outer longitudinal tubular structure may comprise a plurality of wood medium density fibers in a polylactide matrix covered with a polylactide film.

In accordance with certain embodiments of the invention, for example, at least the outer longitudinal tubular structure (or a portion thereof) may comprise a mesh, while in some embodiments both the outer and inner longitudinal tubular structure (or portions thereof) may comprise a mesh. In this regard, for instance, the mesh may strengthen the shelter and/or allow light and water to pass through the perimeter of the shelter and reach the plant being protected by the shelter. In such embodiments of the invention, for instance, the mesh may comprise a polymer-coated biocomposite mesh. The configuration of the mesh structure(s) may vary to provide more or less rigidity and/or openness to the environment. In certain embodiments of the invention, for example, a mesh structure for the outer and/or inner longitudinal tubular structure may independently comprise a plurality of spaced elongate supports connected via at least one strengthening member. In some embodiments of the invention, for instance, the plurality of spaced elongate supports may be hollow. In other embodiments of the invention, for example, the plurality of spaced elongate supports may be solid. According to certain embodiments of the invention, for instance, the plurality of spaced elongate supports may be parallel to each other in a longitudinal direction. In some embodiments of the invention, for example, the plurality of spaced elongate supports may extend longitudinally along or to define at least one of the outer longitudinal tubular structure, the inner longitudinal tubular structure, or any combination thereof. For instance, a plurality of longitudinally extending elongate supports may be positioned to be substantially parallel to each other and spaces apart to define a porous perimeter and the at least one strengthening member may be positioned substantially perpendicular to the plurality of spaced elongate supports to optionally interconnect the plurality of longitudinally extending elongate supports to define a longitudinal tubular structure (e.g., outer and/or inner longitudinal tubular structure). In certain embodiments of the invention, for example, one strengthening member may contact at least two of the plurality of spaced elongate supports. In further embodiments of the invention, for instance, the shelter may further comprise a plurality of apertures extending from the outer longitudinal tubular structure first end at least partially along the outer longitudinal tubular structure.

In accordance with certain embodiments of the invention, for example, the shelter may comprise a substantially circular cross-section. In other embodiments of the invention, for instance, the shelter may comprise a substantially square cross-section. In further embodiments of the invention, for example, the shelter may comprise a substantially rectangular cross-section. In some embodiments of the invention, for instance, the shelter may comprise a substantially triangular cross-section. However, the shelter cross-section may be any suitable geometry as understood by one of ordinary skill in the art, such as any irregularly shaped configuration.

In accordance with certain embodiments of the invention, for example, the shelter may further comprise a protecting member positioned, for example, at the second-outer-longitudinal-tubular-structure end that extends at least partially along the outer longitudinal tubular structure. For example, FIG. 3 illustrates a shelter **2** having a protecting member **80** positioned at the second-outer-longitudinal-tubular-structure end **40.** In certain embodiments of the invention, for instance, the protecting member may comprise a petroleum-based plastic resin. In some embodiments of the invention, for example, the protecting member may comprise at least one of a degradation-resistant coating, a slip-on sleeve, or any combination thereof. In further embodiments of the invention, for instance, at least one of the outer longitudinal tubular structure, the inner longitudinal tubular structure, the plurality of segmented annular divider walls, or any combination thereof may comprise a degradation-resistant coating. According to certain embodiments of the invention, for example, the degradation-resistant coating may comprise at least one of a polypropylene, a high density polyethylene, a low density polyethylene, a polyvinyl chloride, a polyester, a polyurethane, a compostable bioplastic, an atactic polypropylene-modified bitumen (e.g., STARPOL™), a polylactide, or any combination thereof. In some embodiments of the invention, for instance, the degradation-resistant coating may comprise a polypropylene film.

The protective portion, in some embodiments of the invention, may comprise another layer disposed either internal or external to the longitudinal hollow sleeve. In certain embodiments of the invention, the protection portion may comprise a film, the film comprising compounds that assist with protecting the shelter from degradation due to contact with the soil and/or other environmental elements, for example. In certain embodiments of the invention, the protective portion may comprise a coating, the coating including compounds that assist with protecting the shelter from degradation due to contact with the soil and/or other environmental elements, for example. In certain embodiments of the invention, the protection portion may comprise any combination of another layer, a film, and a coating, as described herein.

In an embodiment of the invention, for example, the shelter may comprise a ground support ring near the opening of the shelter configured to rest on or to be inserted into the ground that may surround a base of the shelter. The ground support ring may be configured to be, for example, a strengthening member, a portion that reduces rapid degradation due to being in contact with a ground, a member that is configured to allows the shelter to be inserted in the ground, as well as other uses as contemplated by a person of ordinary skill in the art having the benefit of this disclosure.

In this regard, for example, the shelter may be in the shape of a tube or cylinder comprising a thermoplastic polymer that can be translucent. In alternative embodiments of the invention, for instance, the shelter may comprise a thermoplastic polymer coated with a translucent film. If light is only provided at the upper opening of the structure, then the growth of the young plant may become hindered. As such, for instance, the diameter of the tube or cylinder in the cross-section is sufficient to encompass the seedling during the period of use and a length that typically is less than the seedling at the time of planting but may be adapted to achieve a desired growth profile over time.

### III. Method of Manufacturing a Shelter (not according to the invention)

In another aspect, not according to the invention provides a method for manufacturing a shelter. The method of manufacturing a shelter includes forming an outer longitudinal tubular structure defined by an outer wall, a first-outer-longitudinal-tubular-structure end, and a second-outer-longitudinal-tubular-structure end diametrically opposed to the first-outer-longitudinal-tubular-structure end; forming an inner longitudinal tubular structure defined by an inner wall, a first-inner-longitudinal-tubular-structure end, and a second-inner-longitudinal-tubular-structure end diametrically opposed to the first-inner-longitudinal-tubular-structure end within the outer longitudinal tubular structure; and forming a segmented annular portion positioned between the outer wall and the inner wall. According to certain embodiments for example, forming the outer longitudinal tubular structure, the inner longitudinal tubular structure, and/or the segmented annular portion may comprise at least one of an extrusion process, injection molding and/or the like. At least one of the segmented annular divider walls, in accordance with certain embodiments may extend either directly or indirectly from an outer surface of the inner longitudinal tubular structure towards and connect either directly or indirectly with an inner surface of the outer longitudinal tubular structure. In this regard, the outer and inner longitudinal tubular structures may, according to certain embodiments be joined together via at least one of the segmented divider walls either as a unitary structure (e.g., formed as one single piece and being devoid of any attachment articles such as screws, bolts, clips or the like) or as an assembled structure, in which the individual components (e.g., the outer and inner longitudinal tubular structures and the segmented annular divider walls) may be releasable engaged, such as by screws, bolts, clips and the like, with each other to form an assembled shelter.

The outer longitudinal tubular structure and the inner longitudinal tubular structure may be positioned relative to each other to define an annulus located between the outer and inner longitudinal tubular structures in accordance with certain embodiments. In this regard, the inner longitudinal tubular structure may be located inside the outer longitudinal tubular structure. In certain embodiments of the invention, for example, the outer and inner longitudinal tubular structures may have or share the same center of axis such that the outer and inner longitudinal tubular structures may be concentric. In this regard, certain embodiments of the invention may comprise concentric outer and inner longitudinal tubular structures. In accordance with certain embodiments for example, one or more through channels may be defined by an inner surface of the outer longitudinal tubular structure, an outer surface of the inner longitudinal tubular structure, and one or more segmented annular divider walls. In certain embodiments for example, the segmented annular portion may comprise a plurality of segmented annular divider walls defining a plurality of through channels extending from the first-outer-longitudinal-tubular-structure end to the second-outer-longitudinal-structure end.

In accordance with certain embodiments the plurality of segmented annular divider walls may comprise one or more cap-portions that extend and/or connect the outer and inner longitudinal tubular structures together, in which the cap-portion or cap-portions may include apertures in a top-facing surface extending through a thickness of the cap-portion(s) to a bottom-facing surface to define through channels for receiving retaining structure(s). In this regard, the one or more cap-portions need not extend significantly (if at all) into the longitudinal direction of the annulus defined between the outer and inner longitudinal tubular structures. In certain embodiments for example, the cap-portion(s) may be positioned at either or both the first end and second end of the shelter. In certain embodiments apertures located in an upper cap-portion (e.g., located at or proximate the first end of the shelter) may be aligned with apertures located in a lower cap-portion (e.g., located at or proximate the second end of the shelter). In accordance, with certain embodiments the cap-portions(s) may be releasably engaged with the respective ends of the shelter, such as by engaging the outer and inner longitudinal tubular structures and snapping into place at one or both ends of the shelter.

In some embodiments for instance, the plurality of through channels may be configured to receive at least one retaining structure. For example, at least on or each of the plurality of through channels may be configured (e.g., sized) to receive or accommodate at least one retaining structure. According to certain embodiments for example, the shelter may further comprise at least one retaining structure. According to certain embodiments the at least one retaining structure may comprise a stake, a dowell, a peg, any similar structure, and any combination thereof. In some embodiments for instance, the outer and/or inner longitudinal tubular structure second end(s) may be configured to be inserted below ground level. For instance, the second-outer-longitudinal-tubular-structure end and/or the second-inner-longitudinal-tubular-structure end may comprise a blade or blade-like end or a generally narrower thickness to facilitate insertion into the below ground level. In further embodiments of the invention, for example, the second-outer-longitudinal-tubular-structure end and/or the second-inner-longitudinal-tubular-structure end may also extend above the ground or flush with the ground. In this regard, the portion of the outer longitudinal tubular structure that extends just above ground level may be protected from degradation. In certain embodiments for example, the inner longitudinal tubular structure may be configured to receive a plant (or a portion of a plant) therein. In this regard, for instance, both the inner longitudinal tubular structure and the outer longitudinal tubular structure may be configured to fit over and/or encircle the plant or portion of the plant (e.g., trunk of a tree or bush, etc.). As such, the longitudinal tubular structure may be manufactured in a variety of sizes (both length and diameter) to accommodate many different sizes of trees, shrubs or vines.

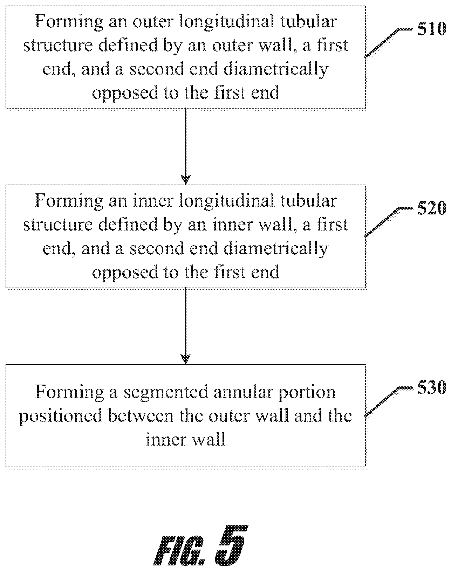

For example, FIG. 5 is a process flow diagram for a method of manufacturing a shelter not according to the invention. As shown in FIG. 5, the exemplary method includes forming an outer longitudinal tubular structure defined by an outer wall, a first-outer-longitudinal-tubular-structure end, and a second-outer-longitudinal-tubular-structure end diametrically opposed to the first-outer-longitudinal-tubular-structure end at operation **510,** forming an inner longitudinal tubular structure defined by an inner wall, a first-inner-longitudinal-tubular-structure end, and a second-inner-longitudinal-tubular-structure end diametrically opposed to the first-inner-longitudinal-tubular-structure end within the outer longitudinal tubular structure at operation **520,** and forming a segmented annular portion positioned between the outer wall and the inner wall at operation **530.**

In accordance with certain embodiments for instance, the first-outer-longitudinal-tubular-structure end may comprise a first-outer-longitudinal-tubular-structure end diameter, and the second-outer-longitudinal-tubular-structure end may comprise a second-outer-longitudinal-tubular-structure end diameter. In certain embodiments the first-outer-longitudinal-tubular-structure end diameter and the second-outer-longitudinal-tubular-structure end diameter may be the same or different. In other embodiments for example, the first-outer-longitudinal-tubular-structure end diameter may be larger or smaller than the second-outer-longitudinal-tubular-structure end diameter. In some embodiments for instance, the first-inner-longitudinal-tubular-structure end may comprise a first-inner-longitudinal-tubular-structure end diameter, and the second-inner-longitudinal-tubular-structure end may comprise a second-inner-longitudinal-tubular-structure end diameter. In certain embodiments the first-inner-longitudinal-tubular-structure end diameter and the second-inner-longitudinal-tubular-structure end diameter may be the same or different. In further embodiments for example, the first-inner-longitudinal-tubular-structure end diameter may be larger or smaller than second-inner-longitudinal-tubular-structure end diameter.

In accordance with certain embodiments for instance, at least the outer longitudinal tubular structure (or a portion thereof) may be translucent, while in some embodiments both the outer longitudinal tubular structure and the inner longitudinal tubular structure (or portions thereof) may be translucent. In other embodiments of the invention, for example, at least the outer longitudinal tubular structure (or a portion thereof) may be transparent, while in some embodiments both the outer longitudinal tubular structure and the inner longitudinal tubular structure (or portions thereof) may be transparent.

According to certain embodiments for instance, at least one of the outer longitudinal tubular structure, the inner longitudinal tubular structure, the plurality of segmented annular divider walls, or any combination thereof may comprise at least one of a polymer, a biodegradable polymer, a biocomposite, or any combination thereof. In some embodiments for example, the polymer may comprise at least one of an extruded thermoplastic polymer, an extruded thermoset polymer, a mold-formed thermoplastic polymer, a mold-formed thermoset polymer, or any combination thereof. In further embodiments of the invention, for instance, the polymer may comprise at least one of a polyethylene, a polypropylene, a partially aromatic polyester, a fully aromatic polyester, a polyhexamethylene diadipamide, a polycaprolactam, an aromatic polyamide, a partially aromatic polyamide, an aliphatic polyamide, or any combination thereof. In some embodiments of the invention, for example, the biodegradable polymer may comprise at least one of a cellulose, a polylactic acid, a cellophane, a native starch, a thermoplastic starch, a polyhydroxy butyrate, a poly-hydroxybutyrate-co-b-hydroxy valerate, a polyglycolic acid, a polycaprolactone, a compostable bioplastic, a platinum-catalyzed silicone, a reclaimed potato starch resin, or any combination thereof.

According to an embodiment the shelter may comprise an extruded plastic component, for example, any one or more of the outer longitudinal tubular structure, the inner longitudinal tubular structure, and/or the plurality of segmented annular divider walls may comprise an extruded plastic. In other embodiments for instance, all or portions of the shelter may comprise a fiber-reinforced composite including a continuous resin matrix reinforced with fibers. In such embodiments, for example, forming the fiber-reinforced composite may comprise impregnating fibers (e.g., nonwoven, woven) with at least one resin by, for example, injection molding, and curing the composite. The continuous resin matrix may extend through and at least partially encase the fibers. In this regard, the fibers may be completely embedded or encased by a resin material or at least partially embedded or encased by a resin material. In such embodiments, for example, the fibers may comprise a nonwoven or a woven. In a non-limiting example of a shelter that comprises a nonwoven composite, for instance, the nonwoven composite may comprise at least one nonwoven layer impregnated with a continuous resin matrix. In certain embodiments for instance, the nonwoven composite may comprise at least one of a meltblown layer or a spunbond layer. In accordance with certain embodiments for instance, the resin may comprise at least one of a thermoplastic resin, a thermosetting resin, or any combination thereof. In some embodiments for example, the resin may comprise at least one of a natural resin, a synthetic resin, or any combination thereof. In further embodiments of the invention, for instance, the resin may comprise at least one of a polyester resin, a vinylester resin, an epoxy resin, or any combination thereof.

According to certain embodiments for instance, the shelter may further comprise at least one of an ultraviolet stabilizer, a waterproofing additive, an extending filler, a prodegradant agent, a reinforcing filler, an animal repellent, a fungal repellent, a bacterial repellent, or any combination thereof. In some embodiments of the invention, for example, the waterproofing additive may comprise at least one of a polyhydrogenomethylsiloxane, a silane, or any combination thereof. In certain embodiments of the invention, for instance, the extending filler may comprise at least one of a wood flour filler, an olive stones powder filler, a wheat straw flour filler, a rice hull ash filler, or any combination thereof.

The material of the shelter may additionally comprise reinforcing fillers, for example, to reinforce the shelter or some portion of the shelter such as any one or more of the longitudinal tubular structures, a support ring, a ground protection ring, and/or any other part of the shelter. Other fillers that may be used to control the amount of light and/or the wavelength of light that may pass through the shelter. In such embodiments of the invention, for example, the reinforcing filler may comprise at least one of a waste paper sludge filler (e.g., a mixture of waste paper fibers and inorganic residues), a wood fiber filler, a jute filler, a flax filler, a hemp filler, a straw filler, a calcium carbonate filler, or any combination thereof. In an embodiment of the invention, a calcium carbonate filler, such as a coated calcium carbonate filler having an average particle size of less than about 3 microns may be used as a filler to, for at least one of, control the amount and/or wavelength of light that may pass through the shelter.

In an example embodiment for instance, the outer longitudinal tubular structure may comprise a plurality of wood medium density fibers in a polylactide matrix covered with a polylactide film.

In accordance with certain embodiments for example, at least the outer longitudinal tubular structure (or a portion thereof) may comprise a mesh, while in some embodiments both the outer and inner longitudinal tubular structure (or portions thereof) may comprise a mesh. In this regard, for instance, the mesh may strengthen the shelter and/or allow light and water to pass through the perimeter of the shelter and reach the plant being protected by the shelter. In such embodiments for instance, the mesh may comprise a polymer-coated biocomposite mesh. The configuration of the mesh structure(s) may vary to provide more or less rigidity and/or openness to the environment. In certain embodiments for example, a mesh structure for the outer and/or inner longitudinal tubular structure may independently comprise a plurality of spaced elongate supports connected via at least one strengthening member. In some embodiments for instance, the plurality of spaced elongate supports may be hollow. In other embodiments of the invention, for example, the plurality of spaced elongate supports may be solid. According to certain embodiments for instance, the plurality of spaced elongate supports may be parallel to each other in a longitudinal direction. In some embodiments for example, the plurality of spaced elongate supports may extend longitudinally along or to define at least one of the outer longitudinal tubular structure, the inner longitudinal tubular structure, or any combination thereof. For instance, a plurality of longitudinally extending elongate supports may be positioned to be substantially parallel to each other and spaces apart to define a porous perimeter and the at least one strengthening member may be positioned substantially perpendicular to the plurality of spaced elongate supports to optionally interconnect the plurality of longitudinally extending elongate supports to define a longitudinal tubular structure (e.g., outer and/or inner longitudinal tubular structure). In certain embodiments for example, one strengthening member may contact at least two of the plurality of spaced elongate supports. In further embodiments for instance, the shelter may further comprise a plurality of apertures extending from the first-outer-longitudinal-tubular-structure end at least partially along the outer longitudinal tubular structure.

In accordance with certain embodiments for example, the shelter may comprise a substantially circular cross-section. In other embodiments for instance, the shelter may comprise a substantially square cross-section. In further embodiments for example, the shelter may comprise a substantially rectangular cross-section. In some embodiments for instance, the shelter may comprise a substantially triangular cross-section. However, the shelter cross-section may be any suitable geometry as understood by one of ordinary skill in the art, such as any irregularly shaped configuration.

In accordance with certain embodiments for example, the shelter may further comprise a protecting member positioned, for example, at the second-outer-longitudinal-tubular-structure end that extends at least partially along the outer longitudinal tubular structure. In such embodiments of the invention, for instance, the protecting member may comprise a petroleum-based plastic resin. In some embodiments for example, the protecting member may comprise at least one of a degradation-resistant coating, a slip-on sleeve, or any combination thereof. In further embodiments for instance, at least one of the outer longitudinal tubular structure, the inner longitudinal tubular structure, the plurality of segmented annular divider walls, or any combination thereof may comprise a degradation-resistant coating. According to certain embodiments for example, the degradation-resistant coating may comprise at least one of a polypropylene, a high density polyethylene, a low density polyethylene, a polyvinyl chloride, a polyester, a polyurethane, a compostable bioplastic, an atactic polypropylene-modified bitumen, a polylactide, or any combination thereof. In some embodiments of the invention, for instance, the degradation-resistant coating may comprise a polypropylene film.

According to certain embodiments for example, the method may comprise co-extruding at least one of the outer longitudinal tubular structure, the inner longitudinal tubular structure, and/or the protecting member. In further embodiments for instance, the plurality of spaced elongate supports may be formed by co-extruding an opaque biocomposite material and a translucent or transparent biopolymer film. In certain embodiments of the invention, for example the shelter may be formed of the co-extruded biopolymer-coated biocomposite supports.

### IV. Method of Protecting a Plan (not according to the invention)

In yet another aspect, not according to the invention, a method of protecting a plant is provided. In accordance with an embodiment the method of protecting a plant includes surrounding the plant or a portion of the plant with a shelter, and inserting at least one retaining structure through at least one of the plurality of through channels. In such embodiments for example, the shelter may comprise an outer longitudinal tubular structure having an outer wall, a first-outer-longitudinal-tubular-structure end, and a second-outer-longitudinal-tubular-structure end diametrically opposed to the first-outer-longitudinal-tubular-structure end; an inner longitudinal tubular structure positioned within the first longitudinal tubular structure and having an inner wall, a first-inner-longitudinal-tubular-structure end, and a second-inner-longitudinal-tubular-structure end diametrically opposed to the first-inner-longitudinal-tubular-structure end; and a segmented annular portion positioned between the outer wall and the inner wall. In this regard, for instance, both the inner longitudinal tubular structure and the outer longitudinal tubular structure may be configured to fit over and/or encircle the plant or portion of the plant (e.g., trunk of a tree or bush, etc.). As such, the longitudinal tubular structure may be manufactured in a variety of sizes (both length and diameter) to accommodate many different sizes of trees, shrubs or vines. In addition, for example, at least on or each of the plurality of through channels may be configured (e.g., sized) to receive or accommodate at least one retaining structure.

The outer longitudinal tubular structure and the inner longitudinal tubular structure may be positioned relative to each other to define an annulus located between the outer and inner longitudinal tubular structures in accordance with certain embodiments of the invention. In this regard, the inner longitudinal tubular structure may be located inside the outer longitudinal tubular structure. In certain embodiments for example, the outer and inner longitudinal tubular structures may have or share the same center of axis such that the outer and inner longitudinal tubular structures may be concentric. In this regard, certain embodiments may comprise concentric outer and inner longitudinal tubular structures. In accordance with certain embodiments for example, one or more through channels may be defined by an inner surface of the outer longitudinal tubular structure, an outer surface of the inner longitudinal tubular structure, and one or more segmented annular divider walls. In certain for example, the segmented annular portion may comprise a plurality of segmented annular divider walls defining a plurality of through channels extending from the first-outer-longitudinal-tubular-structure end to the second-outer-longitudinal-tubular-structure end. At least one of the segmented annular divider walls, in accordance with certain embodiments of the invention, may extend either directly or indirectly from an outer surface of the inner longitudinal tubular structure towards and connect either directly or indirectly with an inner surface of the outer longitudinal tubular structure. In this regard, the outer and inner longitudinal tubular structures may, according to certain embodiments be joined together via at least one of the segmented divider walls either as a unitary structure (e.g., formed as one single piece and being devoid of any attachment articles such as screws, bolts, clips or the like) or as an assembled structure, in which the individual components (e.g., the outer and inner longitudinal tubular structures and the segmented annular divider walls) may be releasable engaged, such as by screws, bolts, clips and the like, with each other to form an assembled shelter.

In accordance with certain embodiments the plurality of segmented annular divider walls may comprise one or more cap-portions that extend and/or connect the outer and inner longitudinal tubular structures together, in which the cap-portion or cap-portions may include apertures in a top-facing surface extending through a thickness of the cap-portion(s) to a bottom-facing surface to define through channels for receiving retaining structures(s). In this regard, the one or more cap-portions need not extend significantly (if at all) into the longitudinal direction of the annulus defined between the outer and inner longitudinal tubular structures. In certain embodiments for example, the cap-portion(s) may be positioned at either or both the first end and second end of the shelter. In certain embodiments of the invention, apertures located in an upper cap-portion (e.g., located at or proximate the first end of the shelter) may be aligned with apertures located in a lower cap-portion (e.g., located at or proximate the second end of the shelter).

According to certain embodiments for instance, the method may further comprise inserting the second-outer-longitudinal-tubular-structure end and/or the second-inner-longitudinal-tubular-structure end below ground level. For instance, the second-outer-longitudinal-tubular-structure end and/or the second-inner-longitudinal-tubular-structure end may comprise a blade or blade-like end or a generally narrower thickness to facilitate insertion into the below ground level. In further embodiments for example, the second-outer-longitudinal-tubular-structure end and/or second-inner-longitudinal-tubular-structure end may also extend above the ground or flush with the ground. In this regard, the portion of the outer longitudinal tubular structure that extends just above ground level may be protected from degradation.

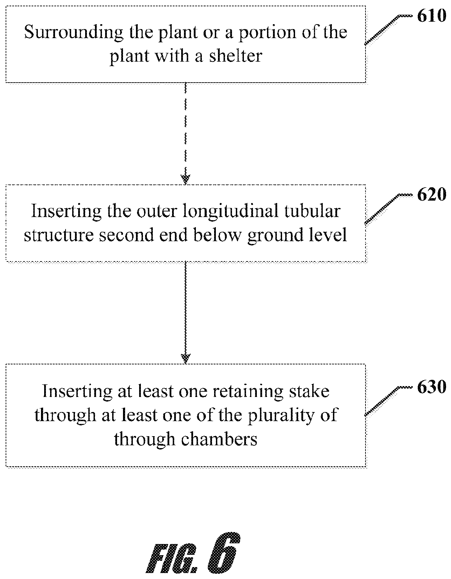

For example, FIG. 6 is a process flow diagram for a method of protecting a plant including an optional step of inserting the outer longitudinal tubular structure second end below ground level not according to the invention. As shown in FIG. 6, the exemplary method includes surrounding the plant or a portion of the plant with a shelter at operation **610,** optionally inserting the second-outer-longitudinal-tubular-structure end below ground level at operation **620,** and inserting at least one retaining structure through at least one of the plurality of through channels at operation **630.** According to certain alternative embodiments of the invention not illustrated here, more than one retaining structure may be used in the same channel and/or each retaining structure in their own corresponding channel.

In accordance with certain embodiments for instance, the first-outer-longitudinal-tubular-structure end may comprise a first-outer-longitudinal-tubular-structure end diameter, and the second-outer-longitudinal-tubular-structure end may comprise a second-outer-longitudinal-tubular-structure end diameter. In certain embodiments the first-outer-longitudinal-tubular-structure end diameter and the second-outer-longitudinal-tubular-structure end diameter may be the same or different. In other embodiments for example, the first-outer-longitudinal-tubular-structure end diameter may be larger or smaller than the second-outer-longitudinal-tubular-structure end diameter. In some embodiments for instance, the inner longitudinal tubular structure first end may comprise an first-inner-longitudinal-tubular-structure end diameter, and the second-inner-longitudinal-tubular-structure end may comprise a second-inner-longitudinal-tubular-structure end diameter. In certain embodiments the first-inner-longitudinal-tubular-structure end diameter and the second-inner-longitudinal-tubular-structure end diameter may be the same or different. In further embodiments for example, the first-inner-longitudinal-tubular-structure end diameter may be larger or smaller than the second-inner-longitudinal-tubular-structure end diameter.

In accordance with certain embodiments for instance, at least the outer longitudinal tubular structure (or a portion thereof) may be translucent, while in some embodiments both the outer longitudinal tubular structure and the inner longitudinal tubular structure (or portions thereof) may be translucent. In other embodiments for example, at least the outer longitudinal tubular structure (or a portion thereof) may be transparent, while in some embodiments both the outer longitudinal tubular structure and the inner longitudinal tubular structure (or portions thereof) may be transparent.

According to certain embodiments for instance, at least one of the outer longitudinal tubular structure, the inner longitudinal tubular structure, the plurality of segmented annular divider walls, or any combination thereof may comprise at least one of a polymer, a biodegradable polymer, a biocomposite, or any combination thereof. In some embodiments for example, the polymer may comprise at least one of an extruded thermoplastic polymer, an extruded thermoset polymer, a mold-formed thermoplastic polymer, a mold-formed thermoset polymer, or any combination thereof. In further embodiments of the invention, for instance, the polymer may comprise at least one of a polyethylene, a polypropylene, a partially aromatic polyester, a fully aromatic polyester, a polyhexamethylene diadipamide, a polycaprolactam, an aromatic polyamide, a partially aromatic polyamide, an aliphatic polyamide, or any combination thereof. In some embodiments for example, the biodegradable polymer may comprise at least one of a cellulose, a polylactic acid, a cellophane, a native starch, a thermoplastic starch, a polyhydroxy butyrate, a poly-hydroxybutyrate-co-b-hydroxy valerate, a polyglycolic acid, a polycaprolactone, a compostable bioplastic, a platinum-catalyzed silicone, a reclaimed potato starch resin, or any combination thereof.

According to an embodiment the shelter may comprise an extruded plastic component, for example, any one or more of the outer longitudinal tubular structure, the inner longitudinal tubular structure, and/or the plurality of segmented annular divider walls may comprise an extruded plastic. In accordance with certain embodiments the shelter may comprise a unitary structure in which the outer longitudinal tubular structure, the inner longitudinal tubular structure, and the plurality of segmented annular divider walls are formed as a single piece (e.g., devoid of any attachment articles such as screws, bolts, clips or the like).

In other embodiments for instance, all or portions of the shelter may comprise a fiber-reinforced composite including a continuous resin matrix reinforced with fibers. In such embodiments, for example, forming the fiber-reinforced composite may comprise impregnating fibers (e.g., nonwoven, woven) with at least one resin by, for example, injection molding, and curing the composite. The continuous resin matrix may extend through and at least partially encase the fibers. In this regard, the fibers may be completely embedded or encased by a resin material or at least partially embedded or encased by a resin material. In such embodiments, for example, the fibers may comprise a nonwoven or a woven. In a non-limiting example of a shelter that comprises a nonwoven composite, for instance, the nonwoven composite may comprise at least one nonwoven layer impregnated with a continuous resin matrix. In certain embodiments for instance, the nonwoven composite may comprise at least one of a meltblown layer or a spunbond layer. In accordance with certain embodiments for instance, the resin may comprise at least one of a thermoplastic resin, a thermosetting resin, or any combination thereof. In some embodiments for example, the resin may comprise at least one of a natural resin, a synthetic resin, or any combination thereof. In further embodiments for instance, the resin may comprise at least one of a polyester resin, a vinylester resin, an epoxy resin, or any combination thereof.

According to certain embodiments for instance, the shelter may further comprise at least one of an ultraviolet stabilizer, a waterproofing additive, an extending filler, a prodegradant agent, a reinforcing filler, an animal repellent, a fungal repellent, a bacterial repellent, or any combination thereof. In some embodiments for example, the waterproofing additive may comprise at least one of a polyhydrogenomethylsiloxane, a silane, or any combination thereof. In certain embodiments for instance, the extending filler may comprise at least one of a wood flour filler, an olive stones powder filler, a wheat straw flour filler, a rice hull ash filler, or any combination thereof.

The material of the shelter may additionally comprise reinforcing fillers, for example, to reinforce the shelter or some portion of the shelter such as any one or more of the longitudinal tubular structures, a support ring, a ground protection ring, and/or any other part of the shelter. Other fillers that may be used to control the amount of light and/or the wavelength of light that may pass through the shelter. In such for example, the reinforcing filler may comprise at least one of a waste paper sludge filler (e.g., a mixture of waste paper fibers and inorganic residues), a wood fiber filler, a jute filler, a flax filler, a hemp filler, a straw filler, a calcium carbonate filler, or any combination thereof. In an embodiment a calcium carbonate filler, such as a coated calcium carbonate filler having an average particle size of less than about 3 microns may be used as a filler to, for at least one of, control the amount and/or wavelength of light that may pass through the shelter.

In an example embodiment for instance, the outer longitudinal tubular structure may comprise a plurality of wood medium density fibers in a polylactide matrix covered with a polylactide film.

In accordance with certain embodiments for example, at least the outer longitudinal tubular structure (or a portion thereof) may comprise a mesh, while in some embodiments both the outer and inner longitudinal tubular structure (or portions thereof) may comprise a mesh. In this regard, for instance, the mesh may strengthen the shelter and/or allow light and water to pass through the perimeter of the shelter and reach the plant being protected by the shelter. In such embodiments for instance, the mesh may comprise a polymer-coated biocomposite mesh. The configuration of the mesh structure(s) may vary to provide more or less rigidity and/or openness to the environment. In certain embodiments for example, a mesh structure for the outer and/or inner longitudinal tubular structure may independently comprise a plurality of spaced elongate supports connected via at least one strengthening member. In some embodiments of the invention, for instance, the plurality of spaced elongate supports may be hollow. In other embodiments for example, the plurality of spaced elongate supports may be solid. According to certain embodiments for instance, the plurality of spaced elongate supports may be parallel to each other in a longitudinal direction. In some embodiments for example, the plurality of spaced elongate supports may extend longitudinally along or to define at least one of the outer longitudinal tubular structure, the inner longitudinal tubular structure, or any combination thereof. For instance, a plurality of longitudinally extending elongate supports may be positioned to be substantially parallel to each other and spaces apart to define a porous perimeter and the at least one strengthening member may be positioned substantially perpendicular to the plurality of spaced elongate supports to optionally interconnect the plurality of longitudinally extending elongate supports to define a longitudinal tubular structure (e.g., outer and/or inner longitudinal tubular structure). In certain embodiments for example, one strengthening member may contact at least two of the plurality of spaced elongate supports. In further embodiments for instance, the shelter may further comprise a plurality of apertures extending from the first-outer-longitudinal-tubular-structure end at least partially along the outer longitudinal tubular structure.

In accordance with certain embodiments for example, the shelter may comprise a substantially circular cross-section. In other embodiments for instance, the shelter may comprise a substantially square cross-section. In further embodiments for example, the shelter may comprise a substantially rectangular cross-section. In some embodiments for instance, the shelter may comprise a substantially triangular cross-section. However, the shelter cross-section may be any suitable geometry as understood by one of ordinary skill in the art, such as any irregularly shaped configuration.

In accordance with certain embodiments for example, the shelter may further comprise a protecting member positioned, for example, at the outer longitudinal tubular structure second end that extends at least partially along the outer longitudinal tubular structure. In such embodiments for instance, the protecting member may comprise a petroleum-based plastic resin. In some embodiments for example, the protecting member may comprise at least one of a degradation-resistant coating, a slip-on sleeve, or any combination thereof. In further embodiments for instance, at least one of the outer longitudinal tubular structure, the inner longitudinal tubular structure, the plurality of segmented annular divider walls, or any combination thereof may comprise a degradation-resistant coating. According to certain embodiments for example, the degradation-resistant coating may comprise at least one of a polypropylene, a high density polyethylene, a low density polyethylene, a polyvinyl chloride, a polyester, a polyurethane, a compostable bioplastic, an atactic polypropylene-modified bitumen, a polylactide, or any combination thereof. In some embodiments for instance, the degradation-resistant coating may comprise a polypropylene film.

These and other modifications and variations to the invention may be practiced by those of ordinary skill in the art without departing from the scope of the appended claims.

## Claims

1. A shelter (1, 2, 3) comprising:
an outer longitudinal tubular structure (4, 104) having an outer wall (10, 110), a first-outer-longitudinal-tubular-structure end (30, 130), and a second-outer-longitudinal-tubular-structure end (40, 140) diametrically opposed to the first-outer-longitudinal-tubular-structure end (30, 130);
an inner longitudinal tubular structure (5, 105) positioned within the first longitudinal tubular structure (4, 104) and having an inner wall (20, 120), a first-inner-longitudinal-tubular-structure end (35, 135), and a second-inner-longitudinal-tubular-structure end (45, 145) diametrically opposed to the first inner-longitudinal-tubular-structure end (35, 135); and
a segmented annular portion (6) positioned between the outer wall (10, 110) and the inner wall (20), said segmented annular portion comprising a plurality of segmented annular divider walls (70) defining a plurality of through channels (50, 150) extending from the first-outer-longitudinal-tubular-structure end (30, 130) to the second-outer-longitudinal-tubular-structure end (40, 140),
wherein the plurality of through channels (50, 150) are configured to receive at least one retaining structure (60),
**characterized in that** the shelter (1, 2, 3) comprises the at least one retaining structure (60) positioned inside a through channel of the plurality of through channels (50, 150) to provide reinforcement to the shelter and/or to anchor the shelter to the ground;
wherein the first-outer-longitudinal-tubular structure end (30, 130) comprises a first-outer-longitudinal-tubular-structure end diameter, the second-outer-longitudinal-tubular-structure end (40, 140) comprises a second-outer-longitudinal-tubular-structure end diameter, and the first-outer-longitudinal-tubular-structure end diameter and the second-outer-longitudinal-tubular-structure end diameter are the same or the first-outer-longitudinal-tubular-structure end diameter is larger than the second-outer-longitudinal-tubular-structure end diameter, and/or,
wherein the first-inner-longitudinal-tubular-structure-end (30, 130) comprises a first-inner-longitudinal-tubular-structure end diameter, the second-inner-longitudinal-tubular-structure (40, 140) end comprises a second-inner-longitudinal-tubular-structure end diameter, and the first-inner-longitudinal-tubular-structure end diameter and the second-inner-longitudinal-tubular-structure end diameter are the same or the first-inner-longitudinal-tubular-structure end diameter is larger than the second-inner-longitudinal-tubular-structure end diameter.

2. The shelter according to claim 1, wherein the at least one retaining structure (60) is selected from the group consisting of a stake, a dowel, a peg, and any combination thereof:
wherein the at least one retaining structure engages ground underneath the shelter.

3. The shelter according to any one of the preceding claims, wherein at least the outer longitudinal tubular structure (4, 104) is translucent.

4. The shelter according to any one of the preceding claims, wherein at least one of the outer longitudinal tubular structure (4, 104), the inner longitudinal tubular structure (5), the plurality of segmented annular divider walls, or any combination thereof comprises at least one of (i) a polymer, such as a polyethylene, a polypropylene, a partially aromatic polyester, a fully aromatic polyester, a polyhexamethylene diadipamide, a polycaprolactam, an aromatic polyamide, a partially aromatic polyamide, an aliphatic polyamide, or any combination thereof; (ii) a biodegradable polymer, such as a cellulose, a polylactic acid, a cellophane, a native starch, a thermoplastic starch, a polyhydroxy butyrate, a poly-hydroxybutyrate-co-b-hydroxy valerate, a polyglycolic acid, a polycaprolactone, a compostable bioplastic, a platinum-catalyzed silicone, a reclaimed potato starch resin, or any combination thereof; (iii) a biocomposite; or (iv) any combination thereof.

5. The shelter according to any one of the preceding claims, further comprising at least one of an ultraviolet stabilizer; a waterproofing additive such as at least one of a polyhydrogenomethylsiloxane, a silane, or any combination thereof; an extending filler such as at least one of a wood flour filler, an olive stones powder filler, a wheat straw flour filler, a rice hull ash filler, or any combination thereof; a prodegradant agent; a reinforcing filler such as at least one of a waste paper sludge filler, a wood fiber filler, a jute filler, a flax filler, a hemp filler, a straw filler, a calcium carbonate filler, or any combination thereof; an animal repellent; a fungal repellent; a bacterial repellent; or any combination thereof.

6. The shelter according to any one of the preceding claims, wherein the outer longitudinal tubular structure comprises a plurality of wood medium density fibers in a polylactide matrix covered with a polylactide film.

7. The shelter according to any one of the preceding claims, wherein at least the outer longitudinal tubular structure comprises a mesh, such as a polymer-coated biocomposite mesh.

8. The shelter according to any one of the preceding claims, wherein at least the outer longitudinal tubular structure comprises a plurality of spaced elongate supports connected via at least one strengthening member; wherein the plurality of spaced elongate supports are hollow or solid.

9. The shelter according to claim 10, wherein the plurality of spaced elongate supports are parallel to each other, and extend longitudinally along at least one of the outer longitudinal tubular structure, the inner longitudinal tubular structure, or any combination thereof.

10. The shelter according to any one of claims 10 to 11, wherein the at least one strengthening member is positioned substantially perpendicular to the plurality of spaced elongate supports, and the at least one strengthening member contacts at least two of the plurality of spaced elongate supports.

11. The shelter according to any one of the preceding claims, further comprising a protecting member positioned at the second-outer-longitudinal-tubular-structure end (45, 145) and extends at least partially along the outer longitudinal tubular structure (40, 140).

12. The shelter according to any one of the preceding claims, wherein at least one of the outer longitudinal tubular structure (4, 104), the inner longitudinal tubular structure (5, 105), the plurality of segmented annular divider walls, or any combination thereof comprises a degradation-resistant coating, such as at least one of a polypropylene, a high density polyethylene, a low density polyethylene, a polyvinyl chloride, a polyester, a polyurethane, a compostable bioplastic, an atactic polypropylene-modified bitumen, a polylactide, or any combination thereof.

13. The shelter according to any one of the preceding claims, wherein the shelter comprises a unitary structure formed as a single piece of material.

## Patentansprüche

1. Schutzraum (1, 2, 3), umfassend:
eine äußere longitudinale rohrförmige Struktur (4, 104), die eine Außenwand (10, 110), ein erstes äußeres longitudinales rohrförmiges Strukturende (30, 130) und ein zweites äußeres longitudinales rohrförmiges Strukturende (40, 140), das dem ersten äußeren longitudinalen rohrförmigen Strukturende (30, 130) diametral gegenüberliegt, besitzt;
eine innere longitudinale rohrförmige Struktur (5, 105), die innerhalb der ersten longitudinalen rohrförmigen Struktur (4, 104) positioniert ist und eine Innenwand (20, 120), ein erstes inneres longitudinales rohrförmiges Strukturende (35, 135) und ein zweites inneres longitudinales rohrförmiges Strukturende (45, 145), das dem ersten inneren longitudinalen rohrförmigen Strukturende (35, 135) diametral gegenüberliegt, besitzt; und
einen segmentierten ringförmigen Abschnitt (6), der zwischen der Außenwand (10, 110) und der Innenwand (20) positioniert ist, wobei der besagte segmentierte ringförmige Abschnitt eine Vielzahl von segmentierten ringförmigen Trennwänden (70) umfasst, die eine Vielzahl von Durchgangskanälen (50, 150) definieren, die sich von dem ersten äußeren longitudinalen rohrförmigen Strukturende (30, 130) zu dem zweiten äußeren longitudinalen rohrförmigen Strukturende (40, 140) erstrecken,
wobei die Vielzahl von Durchgangskanälen (50, 150) so konfiguriert sind, dass sie mindestens eine Haltestruktur (60) aufnehmen,
**dadurch gekennzeichnet, dass** der Schutzraum (1, 2, 3) die mindestens eine Haltestruktur (60) umfasst, die innerhalb eines Durchgangskanals der Vielzahl von Durchgangskanälen (50, 150) positioniert ist, um den Schutzraum zu verstärken und/oder den Schutzraum am Boden zu verankern;
wobei das erste äußere longitudinale rohrförmige Strukturende (30, 130) einen ersten äußeren longitudinalen rohrförmigen Strukturenddurchmesser umfasst, das zweite äußere longitudinale rohrförmige Strukturende (40, 140) einen zweiten äußeren longitudinalen rohrförmigen Strukturenddurchmesser umfasst, und der erste äußeren longitudinale rohrförmige Strukturenddurchmesser und der zweite äußere longitudinale rohrförmige Strukturenddurchmesser gleich sind oder der erste äußere longitudinale rohrförmige Strukturenddurchmesser größer ist als der zweite äußere longitudinale rohrförmige Strukturenddurchmesser, und/oder,
wobei das erste innere longitudinale rohrförmige Strukturende (30, 130) einen ersten inneren longitudinalen rohrförmigen Strukturenddurchmesser umfasst, das zweite innere longitudinale rohrförmige Strukturende (40, 140) einen zweiten inneren longitudinalen rohrförmigen Strukturenddurchmesser umfasst, und der erste innere longitudinale rohrförmige Strukturenddurchmesser und der zweite innere longitudinale rohrförmige Strukturenddurchmesser gleich sind oder der erste innere longitudinale rohrförmige Strukturenddurchmesser größer ist als der zweite innere longitudinale rohrförmige Strukturenddurchmesser.

2. Der Schutzraum nach Anspruch 1, wobei die mindestens eine Haltestruktur (60) aus der Gruppe ausgewählt ist, die aus einem Pflock, einem Dübel, einem Zapfen und irgendeiner Kombination davon besteht, wobei die mindestens eine Haltestruktur in den Boden unterhalb des Schutzraums eindringt.

3. Der Schutzraum nach irgendeinem der vorhergehenden Ansprüche, wobei zumindest die äußere longitudinale rohrförmige Struktur (4, 104) lichtdurchlässig ist.

4. Der Schutzraum nach irgendeinem der vorhergehenden Ansprüche, wobei mindestens eine der äußeren longitudinalen rohrförmigen Struktur (4, 104), der inneren longitudinalen rohrförmigen Struktur (5), der Vielzahl von segmentierten ringförmigen Trennwänden oder irgendeiner Kombination davon mindestens eines umfasst von: (i) ein Polymer, wie ein Polyethylen, ein Polypropylen, ein teilaromatischer Polyester, ein vollaromatischer Polyester, ein Polyhexamethylendiadipamid, ein Polycaprolactam, ein aromatisches Polyamid, ein teilaromatisches Polyamid, ein aliphatisches Polyamid oder irgendeine Kombination davon; (ii) ein biologisch abbaubares Polymer, wie eine Cellulose, eine Polymilchsäure, ein Cellophan, eine native Stärke, eine thermoplastische Stärke, ein Polyhydroxybutyrat, ein Polyhydroxybutyrat-Cob-hydroxyvalerat, eine Polyglykolsäure, ein Polycaprolacton, ein kompostierbarer Biokunststoff, ein platinkatalysiertes Silikon, ein wiedergewonnenes Kartoffelstärkeharz oder irgendeine Kombination davon; (iii) ein Biokomposit; oder (iv) irgendeine Kombination davon.

5. Der Schutzraum nach irgendeinem der vorhergehenden Ansprüche, weiter umfassend mindestens eines von: ein Ultraviolett-Stabilisator; ein wasserabweisendes Additiv, wie mindestens eines von: ein Polywasserstoffmethylsiloxan, ein Silan oder irgendeine Kombination davon; ein streckender Füllstoff, wie mindestens eines von: ein Holzmehl-Füllstoff, ein Olivenkern-Pulver-Füllstoff, ein Weizenstroh-Mehl-Füllstoff, ein Reisschalen-Asche-Füllstoff oder irgendeine Kombination davon; ein prodegradierendes Mittel; ein verstärkender Füllstoff, wie mindestens eines von: ein Altpapierschlamm-Füllstoff, ein Holzfaser-Füllstoff, ein Jute-Füllstoff, ein Flachs-Füllstoff, ein Hanf-Füllstoff, ein Stroh-Füllstoff, ein Calciumcarbonat-Füllstoff oder irgendeiner Kombination davon; ein tierabweisendes Mittel; ein pilzabweisendes Mittel; ein bakterienabweisendes Mittel; oder irgendeine Kombination davon.

6. Der Schutzraum nach irgendeinem der vorhergehenden Ansprüche, wobei die äußere longitudinale rohrförmige Struktur eine Vielzahl von Holzfasern mittlerer Dichte in einer Polylactidmatrix umfasst, die mit einem Polylactidfilm bedeckt sind.

7. Der Schutzraum nach irgendeinem der vorhergehenden Ansprüche, wobei zumindest die äußere longitudinale rohrförmige Struktur ein Netz, wie ein polymerbeschichtetes Biokompositnetz, umfasst.

8. Der Schutzraum nach irgendeinem der vorhergehenden Ansprüche, wobei zumindest die äußere longitudinale rohrförmige Struktur eine Vielzahl von mit Abstand angeordneten, länglichen Stützen umfasst, die über mindestens ein Verstärkungselement verbunden sind; wobei die Vielzahl der mit Abstand angeordneten, länglichen Stützen hohl oder massiv ist.

9. Der Schutzraum nach Anspruch 10, wobei die mehreren mit Abstand angeordneten, länglichen Stützen parallel zueinander sind und sich in Längsrichtung entlang mindestens einer der äußeren longitudinalen rohrförmigen Struktur, der inneren longitudinalen rohrförmigen Struktur oder irgendeiner Kombination davon erstrecken.

10. Der Schutzraum nach irgendeinem der Ansprüche 8 bis 9, wobei das mindestens eine Verstärkungselement im Wesentlichen senkrecht zu der Vielzahl von mit Abstand angeordneten, länglichen Stützen angeordnet ist und das mindestens eine Verstärkungselement mindestens zwei der Vielzahl der mit Abstand angeordneten, länglichen Stützen kontaktiert.

11. Der Schutzraum nach irgendeinem der vorhergehenden Ansprüche, weiter umfassend ein Schutzelement, das an dem zweiten äußeren longitudinalen rohrförmigen Strukturende (45, 145) angeordnet ist und sich zumindest teilweise entlang der äußeren longitudinalen rohrförmigen Struktur (40, 140) erstreckt.

12. Der Schutzraum nach irgendeinem der vorhergehenden Ansprüche, wobei mindestens eine der äußeren longitudinalen rohrförmigen Struktur (4, 104), der inneren longitudinalen rohrförmigen Struktur (5, 105), der Vielzahl von segmentierten ringförmigen Trennwänden oder irgendeiner Kombination davon eine abbaubeständige Beschichtung umfasst, wie mindestens eines von: ein Polypropylen, ein Polyethylen mit hoher Dichte, ein Polyethylen mit niedriger Dichte, ein Polyvinylchlorid, ein Polyester, ein Polyurethan, ein kompostierbarer Biokunststoff, ein ataktischer, mit Polypropylen modifizierter Bitumen, ein Polylactid oder irgendeine Kombination davon.

13. Der Schutzraum nach irgendeinem der vorhergehenden Ansprüche, wobei der Schutzraum eine einheitliche Struktur umfasst, die als ein einziges Materialstück ausgebildet ist.

## Revendications

1. Abri (1, 2, 3) comprenant :
une structure tubulaire longitudinale externe (4, 104) ayant une paroi externe (10, 110), une première extrémité de structure tubulaire longitudinale externe (30, 130), et une seconde extrémité de structure tubulaire longitudinale externe (40, 140) diamétralement opposée à la première extrémité de structure tubulaire longitudinale externe (30, 130) ;
une structure tubulaire longitudinale interne (5, 105) positionnée à l'intérieur de la première structure tubulaire longitudinale (4, 104) et ayant une paroi interne (20, 120), une première extrémité de structure tubulaire longitudinale interne (35, 135), et une seconde extrémité de structure tubulaire longitudinale interne (45, 145) diamétralement opposée à la première extrémité de structure tubulaire longitudinale interne (35, 135) ; et
une portion annulaire segmentée (6) positionnée entre la paroi externe (10, 110) et la paroi interne (20), ladite portion annulaire segmentée comprenant une pluralité de parois de séparation annulaire segmentées (70) définissant une pluralité de canaux traversants (50, 150) s'étendant depuis la première extrémité de structure tubulaire longitudinale externe (30, 130) jusqu'à la seconde extrémité de structure tubulaire longitudinale externe (40, 140),
la pluralité des canaux traversants (50, 150) étant conçus pour recevoir au moins une structure de retenue (60),
**caractérisé en ce que** l'abri (1, 2, 3) comprend la au moins une structure de retenue (60) positionnée à l'intérieur d'un canal traversant de la pluralité des canaux traversants (50, 150) pour fournir le renforcement à l'abri et/ou pour ancrer l'abri au sol ;
la première extrémité tubulaire de structure longitudinale externe (30, 130) comprenant un premier diamètre d'extrémité de structure tubulaire longitudinale externe, la seconde extrémité de structure tubulaire longitudinale externe (40, 140) comprenant un second diamètre d'extrémité de structure tubulaire longitudinale externe, et le premier diamètre d'extrémité de structure tubulaire longitudinale externe et le second diamètre d'extrémité de structure tubulaire longitudinale externe étant identiques ou le premier diamètre d'extrémité de structure tubulaire longitudinale externe étant supérieur au second diamètre d'extrémité de structure tubulaire longitudinale externe, et/ou,
la première extrémité de structure tubulaire longitudinale interne (30, 130) comprenant un premier diamètre d'extrémité de structure tubulaire longitudinale interne, la seconde extrémité de structure tubulaire longitudinale interne (40, 140) comprenant un second diamètre d'extrémité de structure tubulaire longitudinale interne, et le premier diamètre d'extrémité de structure tubulaire longitudinale interne et le second diamètre d'extrémité de structure tubulaire longitudinale interne étant identiques ou le premier diamètre d'extrémité de structure tubulaire longitudinale interne étant supérieur au second diamètre d'extrémité de structure tubulaire longitudinale interne.

2. Abri selon la revendication 1, la au moins une structure de retenue (60) étant sélectionnée dans le groupe constitué d'un piquet, d'un goujon, d'un piton, et de n'importe quelle combinaison de ceux-ci ; la au moins une structure de retenue venant en prise dans le sol en-dessous de l'abri.

3. Abri selon l'une quelconque des revendications précédentes, au moins la structure tubulaire longitudinale externe (4, 104) étant translucide.

4. Abri selon l'une quelconque des revendications précédentes, au moins l'une de la structure tubulaire longitudinale externe (4, 104), de la structure tubulaire longitudinale interne (5), de la pluralité des parois de séparation annulaire segmentées, ou n'importe quelle combinaison de ceux-ci comprenant au moins l'un parmi (i) un polymère, tel qu'un polyéthylène, un polypropylène, un polyester partiellement aromatique, un polyester complètement aromatique, un polyhexaméthylène diadipamide, un polycaprolactame, un polyamide aromatique, un polyamide partiellement aromatique, un polyamide aliphatique, ou n'importe quelle combinaison de ceux-ci ; (ii) un polymère biodégradable, tel qu'une cellulose, un poly(acide lactique), un cellophane, un amidon d'origine naturelle, un amidon thermoplastique, un polyhydroxy butyrate, un poly-hydroxybutyrate-*co*-*b-*hydroxy valérate, un poly(acide glycolique), une polycaprolactone, un bioplastique compostable, un silicone catalysé par du platine, une résine d'amidon de pomme de terre de récupération, ou n'importe quelle combinaison de ceux-ci ; (iii) un biocomposite ; ou (iv) n'importe quelle combinaison de ceux-ci.

5. Abri selon l'une quelconque des revendications précédentes, comprenant en outre au moins l'un d'un agent stabilisant le rayonnement ultraviolet ; d'un additif d'étanchéité à l'eau tel qu'au moins l'un d'un polyhydrogénométhylsiloxane, d'un silane, ou n'importe quelle combinaison de ceux-ci ; d'une charge d'extension telle qu'au moins l'une d'une charge de farine de bois, d'une charge de poudre de noyaux d'olive, d'une charge de farine de paille de blé, d'une charge de cendre de balle de riz, ou n'importe quelle combinaison de celles-ci ; d'un agent prodégradant ; d'une charge de renfort telle qu'au moins l'une d'une charge de pâte à papier de rebut, d'une charge de fibre de bois, d'une charge de jute, d'une charge de lin, d'une charge de chanvre, d'une charge de paille, d'une charge de carbonate de calcium, ou de n'importe quelle combinaison de ceux-ci ; d'un répulsif d'animaux ; d'un répulsif de champignons ; d'un répulsif de bactéries ; ou de n'importe quelle combinaison de ceux-ci.

6. Abri selon l'une quelconque des revendications précédentes, la structure tubulaire longitudinale externe comprenant une pluralité de fibres de densité moyenne de bois dans une matrice de polylactide recouverte d'un film de polylactide.

7. Abri selon l'une quelconque des revendications précédentes, au moins la structure tubulaire longitudinale externe comprenant un maillage, tel qu'un maillage biocomposite enduit de polymère.

8. Abri selon l'une quelconque des revendications précédentes, au moins la structure tubulaire longitudinale externe comprenant une pluralité de supports allongés espacés reliés *via* au moins un élément de renfort ; la pluralité des supports allongés espacés étant creux ou solides.

9. Abri selon la revendication 10, la pluralité des supports allongés espacés étant parallèles l'un par rapport à l'autre, et s'étendant longitudinalement le long d'au moins l'une de la structure tubulaire longitudinale externe, de la structure tubulaire longitudinale interne, ou de n'importe quelle combinaison de ceux-ci.

10. Abri selon l'une quelconque des revendications 10 à 11, le au moins un élément de renfort étant positionné sensiblement perpendiculaire à la pluralité des supports allongés espacés, et le au moins un élément de renfort entrant en contact avec au moins deux de la pluralité des supports allongés espacés.

11. Abri selon l'une quelconque des revendications précédentes, comprenant en outre un élément protecteur positionné au niveau de la seconde extrémité de structure tubulaire longitudinale externe (45, 145) et s'étendant au moins partiellement le long de la structure tubulaire longitudinale externe (40, 140).

12. Abri selon l'une quelconque des revendications précédentes, au moins l'une de la structure tubulaire longitudinale externe (4, 104), de la structure tubulaire longitudinale interne (5, 105), de la pluralité de parois de séparation annulaire segmentées, ou de n'importe quelle combinaison de celles-ci comprenant un revêtement résistant à la dégradation, tel qu'au moins l'un d'un polypropylène, d'un polyéthylène haute densité, d'un polyéthylène basse densité, d'un poly(chlorure de vinyle), d'un polyester, d'un polyuréthane, d'un bioplastique compostable, d'un bitume modifié avec du polypropylène atactique, d'un polylactide, ou de n'importe quelle combinaison de ceux-ci.

13. Abri selon l'une quelconque des revendications précédentes, l'abri comprenant une structure unitaire formée comme une pièce unique de matériau.
